# EUROPÄISCHE PATENTSCHRIFT

(11) **EP 2 102 107 B1**
(45) Veröffentlichungstag und Bekanntmachung des Hinweises auf die Patenterteilung: **16.03.2016**
(21) Anmeldenummer: 07819824.9
(22) Anmeldetag: 15.11.2007
(51) Int. Cl.: C01G 9/00, C08K 3/20, C08K 3/24, C08K 3/26, B01J 23/00, C08K 9/04, C09C 1/40, B01J 20/02

(54) **NEUE ZINKHALTIGE KALZIUM-ALUMINIUM-DOPPELSALZE**
NOVEL ZINC-CONTAINING CALCIUM-ALUMINIUM DOUBLE SALTS
NOUVEAUX SELS DOUBLES CALCIUM-ALUMINIUM CONTENANT DU ZINC

(30) Priorität: 21.11.2006 DE 102006055215
(43) Veröffentlichungstag der Anmeldung: 23.09.2009
(73) Patentinhaber: Nabaltec AG, 92421 Schwandorf (DE)
(72) Erfinder: SAUERWEIN, Reiner, 92449 Steinberg am See (DE); REIMER, Alfred, 93437 Furth i. Wald (DE); EDENHARTER, Ludwig, 93133 Burglengenfeld (DE); SORGALLA, Manfred, 92421 Schwandorf (DE); WEHNER, Wolfgang, 64673 Zwingenberg (DE)
(74) Vertreter: Büchel, Edwin
(86) Internationale Anmeldenummer: PCT/EP2007/009877
(87) Internationale Veröffentlichungsnummer: WO 2008/061665

(56) Entgegenhaltungen:
- EP-A- 0 189 899
- WO-A-02/094919
- DATABASE WPI Week 199149 Derwent Publications Ltd., London, GB; AN 1991-356625 XP002471921 & JP 03 237140 A (ASAHI DENKA KOGYO KK) 23. Oktober 1991 (1991-10-23) & JP 03 237140 A (ASAHI DENKA KOGYO KK) 23. Oktober 1991 (1991-10-23)

## Beschreibung

Die vorliegende Erfindung betrifft neutrale zinkhaltige Kalzium-Aluminium-Doppelsalze, deren Herstellung, Einsatz in Zusammensetzungen und Stabilisatorsystemen sowie deren Verwendungen.

Neue bleifreie PVC-Stabilisatoren benötigen als Stabilisatorkomponenten für die Langzeitstabilisierung in PVC-Hart-Anwendungen Hydrotalzite oder Zeolithe.

Als Langzeitstabilisatorkomponenten sind Magnesium-Aluminium-Hydroxo-Karbonate bekannt (US-A 4 299 759), die meist aus wasserlöslichen Vorstufen unter Bildung von Salzen als Nebenprodukte nach der Kopräzipitationsmethode hergestellt werden (Catalysis Today 11(2), 201-212 (1991)). Dieses Verfahren ist aber wenig vorteilhaft, da durch zusätzlichen Salzballast die Abwasserfracht erhöht wird.

In US-A 4 675 356 sind zinkhaltige Magnesium-Aluminium-Hydroxo-Karbonate beschrieben.

In DE-A 1 964 1551 ist ein PVC-Stabilisator auf Basis von Hydrotalzit und Kalzium-Aluminium-Hydroxid publiziert. Weiterhin offenbart die DE-A 1 952 6370 gemischte Erdalkali-Aluminium-Hydroxide als Säurefänger bei der Verarbeitung von Thermoplasten. Als nachteilig erweist sich aber bei der Synthese die Zugabe von Natriumhydroxid oder Natriumaluminat zu den Reaktionskomponenten, da hierbei molare NaOH-Mengen über das Abwasser entsorgt werden müssen.

In WO-A 92/13914 wird die Verwendung von Kalzium-Aluminium-Hydroxiden (Hydrokalumiten) als Stabilisatoren für PVC beansprucht. Karbonathaltige Homologe sind hierin aber nicht mit eingeschlossen, da mit diesen laut Beschreibung die erwünschte Stabilisatorwirkung nicht erzielbar ist. Die Synthese erfolgt nach der Salzmethode (Kopräzipitation). Diese führt wiederum zu zusätzlichen Salzballasten im Abwasser.

WO-A 93/25613 nennt Katoite als Stabilisatoren für chlorhaltige Olefinpolymere. WO-A 93/25612 beschreibt Katoite mit eingebauten Alkaliionen als PVC-Stabilisatoren. Ein Ausgangsprodukt ist wiederum Natriumaluminat, das nach erwünschter Umsetzung wiederum molare NaOH- Mengen freisetzt, wodurch auch hier die Salzfracht im Abwasser erhöht wird.

In EP-A 0 742 782 sind basische Magnesium-Aluminium-Karbonate oder Kalzium-Aluminium-Hydroxide beschrieben, die zusätzlich die Schwermetalle Titan, Zirkon und Zinn als 4-wertige Kationen enthalten. Diese Metalle werden über die entsprechenden Tetrachloride eingeführt. Das Arbeiten mit diesen Verbindungen in großen, mit Wasser und anderen Reaktanden beladenen Reaktionskesseln ist aber aufwändig, da die Tetrachloride extrem hydrolyseempfindlich sind und an Luft Säurewolken gebildet werden.

Es besteht daher ein-Bedarf an weiteren Salzen, die insbesondere als Stabilisatoren für synthetische Polymere wie Hart- oder Weich-PVC eingesetzt werden können.

Eine Aufgabe der vorliegenden Erfindung liegt somit in der Bereitstellung solcher Salze.

Die Aufgabe wird gelöst durch ein neutrales Kalzium-Aluminium-Doppelsalz der Formel **(A):**

Ca₂ₘ(Zn₂ₙ)Al₂(OH)₆₊₂₍₂ₘ₊₂ₙ₋₁₎An _{*} = oH₂O **(A),**

wobei für **m** und **n** gilt: **m** = 0,5 bis 3 sowie 0,5**m** ≥ **n** > 0; A**n** = CO₃ ist, wobei dieses ganz oder teilweise durch mindestens eine der folgenden Gruppen ausgewählt aus OH, ClO₄ und H₃CS(=O)₂O (Triflat) ausgetauscht sein kann und **o** = 0 bis 3 ist.

Es hat sich nämlich gezeigt, dass gerade diese speziellen Doppelsalze als Stabilisatoren sowie für weitere Verwendungen besonders geeignet sind.

Im Rahmen der vorliegenden Erfindung bedeutet der Begriff "neutral" bei neutralen Kalzium-Aluminium-Doppelsalzen, dass das Doppelsalz nach "außen" elektrisch neutral ist. Das heißt, dass die Summe der Ladungen der Kationen und Anionen unter Berücksichtigung ihrer Anteile im Salz gleich sind. Eine wässrige Suspension solcher neutraler Doppelsalze reagiert basisch.

Bevorzugt ist ein Doppelsalz der Formel **(A),** bei dem **An** = CO₃ ist. Insbesondere bevorzugt ist hierbei, dass für **m** und **n** gilt: **m** = 1,25 bis 3,0 und 0,25**m** ≥ **n** > 0 und **o** = 0 bis 1,5 ist.

Weiterhin bevorzugt ist ein Doppelsalz der Formel **(A),** bei dem **An** = CO₃ ist, das teilweise durch ClO₄ oder OH ersetzt ist.

Weiterhin bevorzugt ist ein Doppelsalz der Formel **(A),** bei dem **An** = Karbonat ist, das ganz durch ClO₄ und OH ersetzt ist.

Es hat sich gezeigt, dass die erfindungsgemäßen Doppelsalze sehr einfach in Wasser durch eine Dreikomponenten-Feststoffsynthese hergestellt werden können.

Ausgehend von den Rohstoffen Kalziumoxid oder Kalziumhydroxid, Zinkoxid oder Zinkhydroxid sowie Aluminiumhydroxid und wahlweise Natrium(Kalium)-Karbonat oder -bikarbonat beziehungsweise Kohlendioxid, wobei Natrium- oder Kaliumkarbonat bevorzugt wird und die Zugabe besonders bevorzugt in einem zweiten Reaktionsschritt erfolgt, lassen sich die neuen basischen Kalzium-Aluminium-Doppelsalze der Formel **(A),** mit **An** = Karbonat oder/und Hydroxid, nach mehrstündigem Erhitzen bei intensivem Rühren in wässriger Phase nach Abtrennung durch Filtration als weiße Feststoffe in nahezu quantitativer Ausbeute gewinnen. Die Reaktion erfolgt bevorzugt drucklos bei 25 bis 98 °C oder bei erhöhten Temperaturen von bis zu 160 °C und Drücken von bis zu 12 bar.

Kalziumhydroxid kann u.a. als Löschkalk oder in wässriger Suspension als Kalkwasser oder Kalkmilch, Aluminiumhydroxid u.a. als Gibbsit, Hydrargillit oder Bayerit und Zinkoxid u.a. als Zinkweiß zum Einsatz kommen.

Perchlorat- oder Triflat-Salze werden durch Umsetzung der Verbindungen gemäß Formel **(A)** mit wässriger verdünnter Perchlorsäure oder Trifluormethansulfonsäure insbesondere bei Raumtemperatur erhalten. In einer Alternativsynthese kann auch von kalzinierten (aktivierten) Verbindungen der Formel **(A)** mit **An** = Karbonat oder/und Hydroxid ausgegangen werden, Nach Aktivierung erfolgt eine Beladung via Anionenaustausch mit wässrigen Alkaliperchlorat- oder -triflatlösungen, wobei wahlweise Alkali(bi)karbonat zugegen ist.

Ein weiterer Gegenstand der vorliegenden Erfindung ist daher ein Verfahren zur Herstellung von erfindungsgemäßen Doppelsalzen, die Schritte enthaltend
(a) Umsetzung von CaO, oder Ca(OH)₂, ZnO oder Zn(OH)₂ und Al(OH)₃ in wässriger Suspension und Zugabe von CO₂ oder Alkali(bi)karbonat, wobei Umsetzung bei Temperaturen von 10 bis 100 °C erfolgt und
(b1) gegebenenfalls Umsetzung des in Schritt (a) erhaltenen Produktes mit Perchlorsäure oder Trifluormethansulfonsäure oder
(b2) gegebenenfalls Kalzinierung des in Schritt (a) erhaltenen Produktes bei Temperaturen von 200 bis 900 °C, Anionenaustausch mit Alkaliperchlorat oder -triflat gegebenenfalls in Anwesenheit von Alkali(bi)karbonat in Wasser.

Ein weiterer Gegenstand der vorliegenden Erfindung ist eine Zusammensetzung enthaltend ein synthetisches Polymer und mindestens ein erfindungsgemäßes Doppelsalz, wobei es sich bei dem synthetischen Polymer insbesondere um Polyvinylchlorid (PVC) handelt.

Darüber hinaus ist ein weiterer Gegenstand der vorliegenden Erfindung ein Stabilisatorsystem für synthetische Polymere, enthaltend mindestens ein erfindungsgemäßes Doppelsalz.

Ferner wurde gefunden, dass Doppelsalze der Formel **(A),** die insbesondere nach dem vorgehend beschriebenen Verfahren hergestellt werden, synthetischen, insbesondere halogenhaltigen Polymeren, bevorzugt PVC, eine sehr gute Stabilität verleihen, insbesondere bei thermischer Beanspruchung (Verarbeitung).

Die Verbindungen der Formel **(A)** können außerdem in anderen synthetischen Polymeren wie HD (High Density)-, LD (Low Density)- und LLD-Polyethylen (PE), Polypropylen (PP) oder Polybutylen (PB) und Polyisobutylen (PIB) eingesetzt werden. Hierbei erfüllen sie die Funktion insbesondere als Füllstoffe oder Flammschutzmittel/Rauchverminderer in hervorragender Weise.

Weiterhin sind sie als Katalysatoren bei basisch katalysierten Reaktionen (z.B. Claisen-Kondensationen und Epoxidationen von Nitrilen sowie Umesterungen) als auch in Oxidationsreaktionen nach Bayer-Villiger zu verwenden. In aktivierter Form können sie als Träger für andere Katalysatoren fungieren, wie z.B. für Hydrierungen, Redoxreaktionen, Michael-Additionen, Epoxidation nach Weitz-Schaeffer und Zyanethylierungen.

Die Aktivierung kann durch Kalzinierung der Doppelsalze **(A)** bei Temperaturen von 200 bis 900 °C erfolgen, wobei Wasser oder Wasser und Kohlendioxid abgespalten wird.

### Typische Doppelsalze sind folgende:

- 1.: Ca_{3,75}Zn_{0,25}Al₂(OH)₁₂CO_{3*}oH₂O;
- 2.: Ca_{3,5}Zn_{0,5}Al₂(OH)₁₂CO_{3*}oH₂O;
- 3.: Ca_{3,25}Zn_{0,75}Al₂(OH)₁₂CO_{3*}oH₂O;
- 4.: Ca₃ZnAl₂(OH)₁₂CO_{3*}oH₂O;
- 5.: Ca_{2,75}Zn_{1,25}Al₂(OH)₁₂CO_{3*}oH₂O;
- 6.: Ca_{2,5}Zn_{0,25}Al₂(OH)_{11,5}CO_{3*}oH₂O;
- 7.: Ca₂ZnAl₂(OH)₁₀CO_{3*}oH₂O;
- 8.: Ca_{3,75}Zn_{0,25}Al₂(OH)₁₂(OH)_{2*}oH₂O;
- 9.: Ca_{3,5}Zn_{0,5}Al₂(OH)₁₂(OH)_{2*}oH₂O;
- 10.: Ca_{3,25}Zn_{0,75}Al₂(OH)₁₂(OH)_{2*}oH₂O;
- 11.: Ca₃ZnAl₂(OH)₁₂(OH)_{2*}oH₂O;
- 12.: Ca_{2,75}Zn_{1,25}Al₂(OH)₁₂(OH)_{2*}oH₂O;
- 13.: Ca_{2,5}Zn1_{,25}Al₂(OH)_{11,5}(OH)_{2*}oH₂O;
- 14.: Ca₂ZnAl₂(OH)₁₀(OH)_{2*}oH₂O;
- 15.: Ca₄Zn_{0,25}Al₂(OH)_{12,5}CO_{3*}oH₂O;
- 16.: Ca_{3,75}Zn_{0,5}Al₂(OH)_{12,5}CO_{3*}oH₂O;
- 17.: Ca_{3,5}Zn_{0,75}Al₂(OH)_{12,5}CO_{3*}oH₂O;
- 18.: Ca_{3,25}ZnAl₂(OH)_{12,5}CO_{3*}oH₂O;
- 19.: Ca₃Zn_{1,25}Al₂(OH)_{12,5}CO_{3*}oH₂O;
- 20.: Ca_{2,25}ZnAl₂(OH)_{10,5}CO_{3*}oH₂O;
- 21.: Ca₄Zn_{0,25}Al₂(OH)_{12,5}(OH)_{2*}oH₂O;
- 22.: Ca_{3,75}Zn_{0,5}Al₂(OH)_{12,5}(OH)_{2*}oH₂O;
- 23.: Ca_{3,5}Zn_{0,75}Al₂(OH)_{12,5}(OH)_{2*}oH₂O;
- 24.: Ca_{3,25}ZnAl₂(OH)_{12,5}(OH)_{2*}oH₂O;
- 25.: *Ca₃Zn_{1,25}Al₂(OH)_{12,5}(OH)₂*oH₂O;
- 26.: Ca_{2,25}ZnAl₂(OH)_{10,5}(OH)_{2*}oH₂O;
- 27.: Ca_{4,25}Zn_{0,25}Al₂(OH)₁₃CO_{3*}oH₂O;
- 28.: Ca₄Zn_{0,5}Al₂(OH)₁₃CO_{3*}oH₂O;
- 29.: Ca_{3,75}Zn_{0,75}Al₂(OH)₁₃CO_{3*}oH₂O;
- 30.: Ca_{3,5}ZnAl₂(OH)₁₃CO_{3*}oH₂O;
- 31.: Ca_{3,25}Zn_{1,25}Al₂(OH)₁₃CO_{3*}oH₂O;
- 32.: Ca₃Zn_{1,5}Al₂(OH)₁₃CO_{3*}oH₂O;
- 33.: Ca_{2,75}Zn_{1,25}Al₂(OH)₁₂(ClO₄)_{2*}oH₂O;
- 34.: Ca_{2,5}ZnAl₂(OH)₁₁CO_{3*}oH₂O;
- 35.: Ca_{2,25}ZnAl₂(OH)_{10,5}(ClO₄)_{2*}oH₂O;
- 36.: C_{4,25}Zn_{0,25}Al₂(OH)₁₃(OH)_{2*}oH₂O;
- 37.: Ca₄Zn_{0,5}Al₂(OH)₁₃(OH)_{2*}oH₂O;
- 38.: Ca_{3,75}Zn_{0,75}Al₂(OH)₁₃(OH)_{2*}oH₂O;
- 39.: Ca_{3,5}ZnAl₂(OH)₁₃(OH)_{2*}oH₂O;
- 40.: Ca_{3,25}Zn_{1,25}Al₂(OH)₁₃(OH)_{2*}oH₂O;
- 41.: Ca₃Zn_{1,5}Al₂(OH)₁₃(OH)_{2*}oH₂O;
- 42.: Ca_{2,75}Zn_{1,25}Al₂(OH)₁₂(ClO₄)_{2*}oH₂O;
- 43.: Ca_{2,5}ZnAl₂(OH)₁₁(OH)_{2*}oH₂O;
- 44.: Ca_{2,25}ZnAl₂(OH)_{10,5}ClO₄(OH)_{*}oH₂O;
- 45.: Ca_{4,5}Zn_{0,25}Al₂(OH)_{13,5}CO_{3*}oH₂O;
- 46.: Ca_{4,25}Zn_{0,5}Al₂(OH)_{13,5}CO_{3*}oH₂O;
- 47.: Ca₄Zn_{0,75}Al₂(OH)_{13,5}CO_{3*}oH₂O;
- 48.: Ca_{3,75}ZnAl₂(OH)_{13,5}CO_{3*}oH₂O;
- 49.: Ca_{3,5}Zn_{1,25}A1₂(OH)₁₃,₅CO_{3*}oH₂O;
- 50.: Ca_{3,25}Zn_{1,5}Al₂(OH)_{13,5}CO_{3*}oH₂O;
- 51.: Ca₃Zn_{1,5}Al₂(OH)₁₃(ClO₄)_{2*}oH₂O;
- 52.: Ca_{2,75}Zn_{1,5} Al₂(OH)_{11,5}CO_{3*}oH₂O;
- 53.: Ca_{2,5}ZnAl₂(OH)₁₁(ClO₄)_{2*}oH₂O;
- 54.: Ca_{4,5}Zn_{0,25}Al₂(OH)_{13,5}(OH)_{2*}oH₂O;
- 55.: Ca_{4,25}Zn_{0,5}Al₂(OH)₁₃,₅(OH)_{2*}oH₂O;
- 56.: Ca₄Zn_{0,75}Al₂(OH)_{13,5}(OH)_{2*}oH₂O;
- 57.: Ca_{3,75}ZnAl₂(OH)_{13,5}(OH)_{2*}oH₂O;
- 58.: Ca_{3,5}Zn_{1,25}Al₂(OH)_{13,5}(OH)_{2*}oH₂O;
- 59.: Ca_{3,25}Zn_{1,5}Al₂(OH)_{13,5}(OH)_{2*}oH₂O;
- 60.: Ca₃ZnAl₂(OH)₁₂(OH)_{2*}oH₂O;
- 61.: Ca_{2,75}ZnAl₂(OH)_{11,5}(OH)_{2*}oH₂O;
- 62.: Ca_{2,5}Zn_{0,75}Al₂(OH)_{10,5}(OH)_{2*}oH₂O;
- 63.: Ca_{4,75}Zn_{0,25}Al₂(OH)₁₄CO_{3*}oH₂O;
- 64.: Ca_{4,5}Zn_{0,5}Al₂(OH)₁₄CO_{3*}oH₂O;
- 65.: Ca_{4,25}Zn_{0,75}Al₂(OH)₁₄CO_{3*}oH₂O;
- 66.: Ca₄ZnAl₂(OH)₁₄CO_{3*}oH₂O;
- 67.: Ca_{3,75}Zn_{1,25}Al₂(OH)₁₄CO_{3*}oH₂O;
- 68.: Ca_{3,5}Zn_{1,5}Al₂(OH)₁₄CO_{3*}oH₂O;
- 69.: Ca_{3,25}Zn_{1,25}Al₂(OH)₁₃(ClO₄)_{2*}oH₂O;
- 70.: Ca₃ZnAl₂(OH)₁₂(ClO₄)₂oH₂O;
- 71.: Ca_{2,75}Zn_{0,75}Al₂(OH)₁₁CO_{3*}oH₂O;
- 72.: Ca_{2,5}Zn_{0,75}Al₂(OH)_{9,5}CO_{3*}oH₂O;
- 73.: Ca_{4,75}Zn_{0,2}Al₂(OH)₁₄(OH)_{2*}oH₂O;
- 74.: Ca_{4,5}Zn_{0,5}Al₂(OH)₁₄(OH)_{2*}oH₂O;
- 75.: Ca_{4,25}Zn_{0,75}Al₂(OH)₁₄(OH)_{2*}oH₂O;
- 76.: Ca₄ZnAl₂(OH)₁₄(OH)_{2*}oH₂O;
- 77.: Ca_{3,75}Zn_{1,25}Al₂(OH)₁₄(OH)_{2*}oH₂O;
- 78.: Ca_{3,5}Zn_{1,5}Al₂(OH)₁₄(OH)_{2*}oH₂O;
- 79.: Ca_{3,25}Zn_{1,25}Al₂(OH)₁₃ClO₄(OH)_{*}oH₂O;
- 80.: Ca₃ZnAl₂(OH)₁₂₍OH)_{2*}oH₂O;
- 81.: Ca_{2,75}Zn_{0,75}Al(OH)₁₁(OH)_{2*}oH₂O;
- 82.: Ca_{2,5}Zn_{0,75}Al₂(OH)_{10,5}(ClO₄)_{2*}oH₂O;
- 83.: Ca_{3,5}Zn_{0,25}Al₂(OH)_{11,5}CO_{3*}oH₂O;
- 84.: Ca_{3,25}Zn_{0,5}Al₂(OH)_{11,5}CO_{3*}oH₂O;
- 85.: Ca₃Zn_{0,75}Al₂(OH)_{11,5}CO_{3*}oH₂O;
- 86.: Ca_{2,75}ZnAl₂(OH)_{11,5}CO_{3*}oH₂O;
- 87.: Ca_{2,5}Zn_{1,25}Al₂(OH)_{11,5}(ClO₄)_{2*}oH₂O;
- 88.: Ca_{2,25}Zn_{0,75}Al₂(OH)₁₀CO_{3*}oH₂O;
- 89.: Ca₂Zn_{0,75}Al₂(OH)_{9,5}CO_{3*}oH₂O;
- 90.: Ca_{3,5}Zn_{0,25}Al₂(OH)_{11,5}(OH)_{2*}oH₂O;
- 91.: Ca_{3,25}Zn_{0,5}Al₂(OH)_{11,5}(OH)_{2*}oH₂O;
- 92.: Ca₃Zn_{0,75}Al₂(OH)_{11,5}(OH)_{2*}oH₂O;
- 93.: Ca_{2,75}ZnAl₂(OH)_{11,5}(ClO₄)_{2*}oH₂O;
- 94.: Ca_{2,5}Zn_{1,25}Al₂(OH)_{11,5}ClO₄(OH)_{*}oH₂O;
- 95.: Ca_{2,25}Zn_{0,75}Al₂(OH)_{0,75}(ClO₄)_{2*}oH₂O;
- 96.: Ca₂Zn_{0,75}Al₂(OH)_{9,5}(OH)_{2*}oH₂O;
- 97.: Ca_{3,25}Zn_{0.25}Al₂(OH)₁₁CO_{3*}oH₂O;
- 98.: Ca₃Zn_{0,5}Al₂(OH)₁₁CO_{3*}oH₂O;
- 99.: Ca_{2,75}Zn_{0,75}Al₂(OH)₁₁ClO₄)_{2*}oH₂O;
- 100.: Ca_{2,5}ZnAl₂(OH)₁₁ ClO₄(OH)_{*}oH₂O;
- 101.: Ca_{2,25}Zn_{0,5}Al₂(OH)_{9,5}CO_{3*}oH₂O;
- 102.: Ca₂Zn_{0,5}Al₂(OH)₉CO_{3*}oH₂O;
- 103.: Ca_{1,75}Zn_{0,7}Al₂(OH)₉CO_{3*}oH₂O;
- 104.: Ca_{3,25}Zn_{0,25}Al₂(OH)₁₁(OH)_{2*}oH₂O;
- 105.: Ca₃Zn_{0,5}Al₂(OH)₁₁OH)_{2*}oH₂O;
- 106.: Ca_{2,75}Zn_{0,75}Al₂(OH)₁₁(OH)_{2*}oH₂O;
- 107.: Ca_{2,5}ZnAl₂(OH)₁₁(CO₃)_{0,5}ClO_{4*}oH₂O;
- 108.: Ca_{2,25}Zn_{0,5}Al₂(OH)_{9,5}(OH)_{2*}oH₂O;
- 109.: Ca₂Zn_{0,5}Al₂(OH)₁₁(OH)_{2*}oH₂O;
- 110.: Ca_{1,75}Zn_{0,75}Al₂(OH)₉(OH)_{2*}oH₂O;
- 111.: Ca₃Zn_{0,25}Al₂(OH)_{10,5}CO_{3*}oH₂O;
- 112.: Ca_{2,75}Zn_{0,5}Al₂(OH)_{10,5}CO_{3*}oH₂O;
- 113.: Ca_{2,5}Zn_{0,75}Al₂(OH)_{10,5}CO_{3*}oH₂O;
- 114.: Ca_{2,25}Zn_{0,25}Al₂(OH)_{10,5}CO_{3*}oH₂O;
- 115.: Ca₂Zn_{0,25}Al₂(OH)_{8,5}CO_{3*}oH₂O;
- 116.: Ca_{1,75}Zn_{0,5}Al₂(OH)_{8,5}CO_{3*}oH₂O;
- 117.: Ca₃Zn_{0,25}Al₂(OH)_{8,5}(OH)_{2*}oH₂O;
- 118.: Ca_{2,75}Zn_{0,5}Al₂(OH)_{10,5}(OH)_{2*}oH₂O;
- 119.: Ca_{2,5}Zn_{0,75}Al₂(OH)_{10,5}ClO₄(OH)_{*}oH₂O;
- 120.: Ca_{2,25}ZnAl₂(OH)_{10,5}(CO₃)_{0,5}ClO_{4*}oH₂O;
- 121.: Ca₂ZnAl₂(OH)₁₀(ClO₄)_{2*}oH₂O;
- 122.: Ca_{1,75}Zn_{0,25}Al₂(OH)₈(OH)_{2*}oH₂O;
- 123.: Ca_{2,75}Zn_{0,25}Al(OH)₁₀CO_{3*}oH₂O;
- 124.: Ca_{2,5}Zn_{0,5}AL₂(OH)₁₀CO_{3*}oH₂O;
- 125.: Ca_{2,25}Zn_{0,75}Al₂(OH)₁₀ClO₄(OH)_{*}oH₂O;
- 126.: Ca₂ZnAl₂(OH)₁₀ClO₄(OH)_{*}oH₂O;
- 127.: Ca_{1,75}Zn_{0,25}Al(OH)₈CO_{3*}oH₂O;
- 128.: Ca_{1,5}Zn_{0,75}Al₂(OH)_{8,5}CO_{3*}oH₂O;
- 129.: Ca_{2,75}Zn_{0,25}Al(OH)₁₀(OH)_{2*}oH₂O;
- 130.: Ca_{2,5}Zn_{0,5}Al(OH)₁₀(OH)_{2*}oH₂O;
- 131.: Ca_{2,25}Zn_{0,75}Al₂(OH)₁₀(OH)_{2*}oH₂O;
- 132.: Ca₂ZnAl₂(OH)₁₀(CO₃)_{0,5}ClO_{4*}oH₂O;
- 133.: Ca_{1,75}Zn_{0,25}Al₂(OH)₈(CO₃)_{0,5}ClO_{4*}oH₂O;
- 134.: Ca_{1,5}Zn_{0,75}Al₂(OH)_{8,5}(OH)_{2*}oH₂O;
- 135.: Ca_{3,75}Zn_{0,25}Al₂(OH)₁₂(CO₃)_{0,5}(OH)_{*}oH₂O;
- 136.: Ca_{3,75}Zn_{0,25}Al₂(OH)₁₂(CO₃)_{0,25}(OH)_{1,5*}oH₂O;
- 137.: Ca_{3,5}Zn_{0,5}Al₂(OH)₁₂(CO₃)_{0,5}(OH)_{*}oH₂O;
- 138.: Ca_{3,5}Zn_{0,5}Al₂(OH)₁₂(CO₃)_{0,25}(OH)_{1,5*}oH₂O;
- 139.: Ca_{3,75}Zn_{0,25}Al₂(OH)₁₂(CO₃)_{0,75}(ClO₄)_{0,5*}oH₂O;
- 140.: Ca_{3,75}Zn_{0,25}Al₂(OH)₁₂(C0₃)_{0,5}ClO_{4*}oH₂O;
- 141.: Ca_{3,5}Zn_{0,5}Al₂(OH)₁₂(CO₃)_{0,75}(ClO₄)_{0,5*}oH₂O;
- 142.: Ca_{3,5}Zn_{0,5}Al₂(OH)₁₂(CO₃)_{0,5}ClO_{4*}oH₂O;
- 143.: Ca_{3,75}Zn_{0,25}Al₂(OH)₁₂(ClO₄)_{0,5}(OH)_{1,5*}oH₂O;
- 144.: Ca_{3,75}Zn_{0,25}Al₂(OH)₁₂ClO₄(OH)_{*}oH₂O;
- 145.: Ca_{3,5}Zn_{0,5}Al₂(OH)₁₂(ClO₄)_{0,5}(OH)_{1,5*}oH₂O;
- 146.: Ca_{3,5}Zn_{0,5}Al₂(OH)₁₂ClO₄(OH)_{*}oH₂O;

Das o hat hierbei die oben angegebene Bedeutung.

Bevorzugt sind die Verbindungen 1 bis 7, 15 bis 20, 27 bis 35, 45 bis 53, 61 bis 72, 83 bis 89, 97 bis 103, 111 bis 116, 123 bis 128, 135 bis 138 und 139 bis 146. Ganz besonders bevorzugt sind dabei die Verbindungen 1 bis 4, 15 bis 19, 27 bis 32, 45 bis 50, 63 bis 68, 83 bis 87, 97 bis 101 und 143 bis 146.

Die Doppelsalze der Formel **(A)** können insbesondere als Thermostabilisatoren für PVC in Einsatzmengen von 0,1 bis 10 phr zur Verwendung kommen. Bevorzugt sind 0,5 bis 5,0 phr, besonders bevorzugt sind 1,0 bis 3,0 phr.

In erfindungsgemäßen Stabilisatorsystemen und insbesondere zur Thermostabilisierung von PVC können zusätzlich folgende Verbindungen beziehungsweise Verbindungsklassen zugegen sein:
- Metallhydroxide oder -seifen (Metall: Mg, Ca, Zn und Al)
- Hydrotalzite, Dawsonite und Zeolithe
- Beta-diketone oder Beta-ketoester
- Aminourazile und -thiourazile
- Glyzidylverbindungen,
- Polyole (z.B. Maltit, Lactit, Palatinit, Pentaerythrit, Dipentaerythrit oder THEIC)
- Phosphorigsäureester,
- Alkali-, Erdalkali- oder Zinkperchlorate (beziehungsweise -triflate), auch gelöst in Wasser oder einem organischen Solvens (z.B. BDG (Butyldiglykol), PEG (Polyethylenglykol) oder ein Polyol).

Nähere Ausführungen zu den Verbindungen und Verbindungsklassen (Definitionen und Mengenangaben) können EP 1 669 397 entnommen werden.

Weiterhin können folgende Additive optionsweise zugegeben sein:
- Füllstoffe
- Gleitmittel
- Weichmacher
- Pigmente
- Epoxidierte Fettsäureester
- Antioxidantien
- UV-Absorber und Lichtschutzmittel
- Treibmittel

Detaillierte Angaben hierzu sind in EP 1 669 397 A1 enthalten.

Zusätzliche Additive sind optische Aufheller, Antistatika, Biozide, Verarbeitungshilfen, Antifoggingagentien, Gelierhilfen, Schlagzähmodifikatoren Metalldesaktivatoren, Flammschutzmittel und Rauchverminderer sowie Kompatibilisatoren. Beschreibungen hierzu finden sich in "Kunststoffadditive", R. Gächter, H. Müller, Carl Hanser Verlag, 3. Ausgabe, 1989 und in "Handbook of Polyvinyl Chloride Formulating" E.J. Wickson, J. Wiley & Sons, 1993.

Ein weiterer Gegenstand der vorliegenden Erfindung ist somit ein Stabilisatorsystem gemäß der vorliegenden Erfindung, bei dem zusätzlich mindestens eine der folgenden Substanzen vorhanden ist:

ein Mt^{II} (hydr)oxid (Mt = Mg, Ca, Zn) oder Aluminiumhydroxid, eine Mg-, Ca-, Al- oder Zn-Seife, ein Hydrotalzit, Dawsonit, Zeolith oder ein Ca-Al-hydroxo-Hydrogenphosphit, eine Glyzidylverbindung, ein epoxidierter Fettsäureester, ein Polyol (z.B. Maltit, Lactit, Palatinit, Pentaerythrit, Dipentaerythrit, TMP (Bis-TMP) oder THEIC), ein Phosphorigsäureester, 2-Naphthol, ein Alkali-, Erdalkali- oder Zinkperchlorat (beziehungsweise -triflat) - auch gelöst in Wasser oder einem organischen Solvens (z.B. BDG, PEG oder ein Polyol) -, ein Costabilisator aus der Gruppe der substituierten Zyanazetylharnstoffe, der substituierten Aminourazile, 3-Aminokrotonsäureester und/oder Dihydropyridindikarbonsäureester, Verarbeitungshilfen, Gleitmittel, Weichmacher, Pigmente, Füllstoffe, epoxidierte Fettsäureester, Antioxidantien, UV-Absorber, Lichtstabilisatoren, Schlagzähmodifikatoren, optische Aufheller, Antistatika, Biozide, Flammschutzmittel, Treibmittel oder Antifoggingagentien.

Die erfindungsgemäßen Stabilisatorsysteme eignen sich als Stabilisatoren für synthetische Polymere, insbesondere als PVC-Stabilisatoren, insbesondere zur Stabilisierung von Hart-PVC und Weich-PVC.

Beispiele für die zu stabilisierenden chlorhaltigen Polymere sind Polymere des Vinylchlorids, Vinylidenchlorids, Vinylharze enthaltend Vinylchlorideinheiten in deren Struktur, wie Kopolymere des Vinylchlorids und Vinylester von aliphatischen Säuren, insbesondere Vinylazetat, Kopolymere des Vinylchlorids mit Estern der Acryl- und Methacrylsäure und mit Acrylnitril, Kopolymere des Vinylchlorids mit Dienverbindungen und ungesättigten Dikarbonsäuren oder deren Anhydride, wie Kopolymere des Vinylchlorids mit Diethylmaleat, Diethylfumarat oder Maleinsäureanhydrid, nachchlorierte Polymere und Kopolymere des Vinylchlorids, Kopolymere des Vinylchlorids und Vinylidenchlorids mit ungesättigten Aldehyden, Ketonen und anderen, wie Acrolein, Krotonaldehyd, Vinylmethylketon, Vinylmethylether, Vinylisobutylether und ähnliche; Polymere des Vinylidenchlorids und Kopolymere desselben mit Vinylchlorid und anderen polymerisierbaren Verbindungen; Polymere des Vinylchlorazetates und Dichlordivinylethers; chlorierte Polymere des Vinylazetates, chlorierte polymere Ester der Acrylsäure und der alpha-substituierten Acrylsäure; Polymere von chlorierten Styrolen, zum Beispiel Dichlorstyrol; Chlorkautschuke; chlorierte Polymere des Ethylens; Polymere und nachchlorierte Polymere von Chlorbutadiens und deren Kopolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Kopolymerisate des Vinylchlorids mit polymerisierbaren Verbindungen wie Acrylnitril, Vinylazetat oder ABS zu verstehen, wobei es sich um Suspensions-, Masse- oder Emulsionspolymerisate handeln kann.

Bevorzugt ist ein PVC-Homopolymer, auch in Kombination mit Polyacrylaten oder Polymethacrylaten.

Ferner kommen auch Pfropfpolymerisate von PVC mit EVA (Ethylen-Vinylacetat-Copolymer), ABS (Acrylnitril-Butadien-Styrol-Copolymer) und MBS (Methylmethacrylat-Butadien-Styrol-Copolymer) in Betracht, ebenso Pfropfpolymerisate von PVC mit PMMA. Bevorzugte Substrate sind auch Mischungen der vorstehend genannten Homo- und Kopolymerisate, insbesondere Vinylchlorid-Homopolymerisate, mit anderen thermoplastischen oder/und elastomeren Polymeren, insbesondere Blends mit ABS, MBS, NBR (Acrylnitril-Butadien-Kautschuk), SAN (Styrol-Acrylnitril-Copolymer), EVA (Ethylen-Vinylacetat-Copolymer), CPE (chloriertes PE), PMA (Polymethylacrylat), PMMA (Polymethylmethacrylat), EPDM (Ethylen-Propylen-Dien-Elastomer) und Polylaktonen, insbesondere aus der Gruppe ABS, NBR, NAR, SAN und EVA. Die verwandten Abkürzungen für die Kopolymerisate sind dem Fachmann geläufig und bedeuten folgendes: ABS Acrylnitril-Butadien-Styrol; SAN Styrol-Acrylnitril; NBR Acrylnitril-Butadien; NAR Acrylnitril-Acrylat; EVA Ethylen-Vinylazetat. Es kommen insbesondere auch Styrol-Acrylnitril-Kopolymerisate auf Acrylat-Basis (ASA) in Betracht. Bevorzugt als Komponente sind in diesem Zusammenhang Polymerzusammensetzungen, die als Komponenten (i) und (ii) eine Mischung aus 25-75 Gew.-% PVC und 75-25 Gew.-% der genannten Kopolymerisate enthalten. Von besonderer Bedeutung sind als Komponente Zusammensetzungen aus (i) 100 Gewichtsteilen PVC und (ii) 0-300 Gewichtsteilen ABS und/oder mit SAN modifiziertes ABS und 0-80 Gewichtsteilen der Kopolymeren NBR, NAR und/oder EVA, insbesondere jedoch EVA.

Weiterhin kommen zur Stabilisierung im Rahmen dieser Erfindung auch insbesondere Rezyklate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Rezyklat. Ein weiterer Einsatz der erfindungsgemäßen Stabilisatorkombinationen beruht darin, dass dem Fertigartikel aus Hart- oder Weich-PVC antistatische Eigenschaften verliehen werden können. Auf diese Weise ist es möglich, den Einsatz teurer Antistatika zu reduzieren. Bevorzugt für diese Anwendung ist Weich-PVC oder PVC-Halbhart.

Ein weiterer Gegenstand der Erfindung sind Gebrauchsmittel (Gebrauchsgegenstände), die PVC und erfindungsgemäße Systeme enthalten.

Bevorzugt ist auch die Verwendung von Gebrauchsartikeln, die sich durch eine besondere feine Schaumstruktur auszeichnen. Dies gilt für Hart-, Weich- und Halbhart-PVC. Besonders wichtig ist dieser Aspekt bei Tapeten und Fußböden aus Weich-PVC.

Die erfindungsgemäße Stabilisierung eignet sich sowohl für chlorhaltige Polymerzusammensetzungen, die nicht weichgemachte beziehungsweise weichmacherfreie oder im Wesentlichen weichmacherfreie Zusammensetzungen darstellen, als auch für weichgemachte Zusammensetzungen. Besonders bevorzugt sind Anwendungen in Hart-PVC beziehungsweise PVC-Halbhart.

Die erfindungsgemäßen Zusammensetzungen eignen sich insbesondere, in Form von Hart-Rezepturen, für Hohlkörper (Flaschen), Verpackungsfolien (Tiefziehfolien), Blasfolien, "Crash Pad"-Folien (Automobile), Rohre, Schaumstoffe, Schwerprofile (Fensterrahmen), Lichtwandprofile, Bauprofile, Folien (auch hergestellt nach dem Luvithermverfahren), Profile, Sidings, Fittings, Bürofolien und Apparaturgehäuse, Isolatoren, Computer und Bestandteile von Haushaltsgeräten sowie für Elektronikanwendungen insbesondere im Halbleiterbereich. Ganz besonders geeignet sind diese zur Herstellung von Fensterprofilen mit hohem Weißgrad und Oberflächenglanz.

Bevorzugte andere Zusammensetzungen in Form von Halbhart- und Weich-Rezepturen sind für Drahtummantelungen, Kabelisolierungen, Dekorationsfolien, Dachfolien, Schaumstoffe, Agrarfolien, Schläuche, Dichtungsprofile, Fußböden, Tapeten, KFZ-Teile, Weich-Folien, Spritzgussteile, Bürofolien und Folien für Traglufthallen geeignet. Beispiele für die Anwendung der erfindungsgemäßen Zusammensetzungen als Plastisole sind Kunstleder, Fußböden, Textilbeschichtungen, Tapeten, Coil-Coatings und Unterbodenschutz für Kraftfahrzeuge, Beispiele für Sinter-PVC-Anwendungen der erfindungsgemäßen Zusammensetzungen sind Slush, Slush Mould und Coil-Coatings sowie in E-PVC für Folien hergestellt nach dem Luvithermverfahren. Näheres hierzu siehe "KUNSTSTOFFHANDBUCH PVC", Band 2/2, W. Becker/H. Braun, 2. Aufl. 1985, Carl Hanser Verlag, S. 1236-1277.

Die erfindungsgemäßen Doppelsalze können auch als Adsorbate verwendet werden, wobei die Doppelsalze als feste Träger dienen und Alkali- oder Erdalkaliperchlorate beziehungsweise -triflate in flüssiger (gelöster) Form auf diese aufgebracht oder auf diese aufgesprüht werden.

Adsorbate von Natriumperchlorat oder Natriumtriflat sind zugänglich durch Versprühen oder Verrühren von entsprechenden Salzlösungen auf/mit aktivierte(n) oder nichtaktivierte(n) Verbindungen nach Formel (A).

Bevorzugt werden außerdem gecoatete erfindungsgemäße Doppelsalze. Das Coating mit Stearin- oder Palmitinsäure wird bei 50 bis 80 °C durchgeführt. Dieser Schritt erfolgt vor einer Filtration, also während des Verfahrens oder nach einer Trocknung, also nach dem eigentlichen Herstellverfahren, durch Zugabe der Fettsäuren. Bevorzugt wird dieser Schritt in einem Henschel-Mischer vollzogen.

Ein weiterer Gegenstand der vorliegenden Erfindung ist die Verwendung der erfindungsgemäßen Doppelsalze als Additive für Polyolefine, z.B. für PE, PP, PB und PIB oder andere synthetische Polymere, insbesondere als Flammschutzmittel/Rauchverminderer oder Füllstoffe oder als Katalysator(vorstufen) und zur Enzymimmobilisierung.

### Beispiele

### Beispiel 1: Herstellung eines Ca-Al-Doppelsalzes (Modifikation 1)

In einem 2l-Becherglas wird eine Mischung aus 64,8g (875mMol) Ca(OH)₂, 10,2g (125 mMol) ZnO, 42g (500 mMol) Al(OH)₃-feucht und 26,5g (250 mMol) Na₂CO₃ in 1000ml H₂O 2 Stdn. bei 90° C ultraturraxiert (10,000UpM). Anschließend lässt man weitere 2 Stdn. unter intensivem Rühren auf RT. abkühlen. Nach Absaugen und Neutralwaschen beträgt die Produktausbeute (Trocknung: Gewichtskonstanz bei 115 °C) 112g (weißes Pulver) mit der Zusammensetzung Ca_{3,3} (Zn_{0,5}) Al₂(OH)_{10,8} (CO₃)_{1,4} 0,8H₂O (MG: 484,6g) - quant. Ausbeute.

### Elementaranalyse:

CaO_{gef}.34,2%; ZnO_{gef.} 8,3%; Al₂O_{3gef.} 21,3%; CO_{2gef} 13,0%; H₂O_{gef.} 23,2%
CaO_{ber}.34,8; ZnO_{ber}. 8,4%; Al₂O_{3ber.} 21,0% CO_{2ber.} 12,7%; H₂O_{ber.} 23,0%

### Beispiel 2: Herstellung eines Ca-Al-Doppelsalzes (Modifikation 2)

In einem 21-Becherglas wird eine Mischung aus 55,6g (750 mMol) Ca(OH)₂, 20,4g (250 mMol) ZnO, 42g (500 mMol) Al(OH)₃-feucht und 26,5g (250 mMol) Na₂CO₃ in 1000ml H₂O 2 Stdn. bei 90 °C ultraturraxiert (10,000UpM). Anschließend lässt man weitere 2 Stdn. unter intensivem Rühren auf RT. abkühlen. Nach Absaugen und Neutralwaschen beträgt die Produktausbeute (Trocknung: Gewichtskonstanz bei 115 °C) 114g (weißes Pulver) mit der Zusammensetzung Ca₃(Zn)Al₂(OH)_{11,2} (CO₃)_{1,4} .0,6H₂O (MG: 510,0g) - quant. Ausbeute.

### Elementaranalyse:

CaO_{gef}. 31,2%; ZnO_{gef.}15,8%; Al₂O_{3gef.} 20,2%; CO_{2gef.} 11,8%; H₂O_{gef.} 22,0%
CaO_{ber}. 30,1%; ZnO_{ber}.15,9%; Al₂O_{3ber.} 20,0%; CO_{2ber.} 12,1 % H₂O_{ber.} 21,9%

Die Produkte können gegebenenfalls mit Stearinsäure oder Palmitinsäure (0,5 bis 5,0 Gew.-%) gecoatet werden. Dies kann nach fertiger Umsetzung also vor der Filtration oder nach dem Trocknungsprozess in einem Mischer geschehen.

**Beispiel 3:** Anwendungstechnische Prüfung der erfinderischen Produkte der PM1, PM2 und Vergleich mit dem Handelsprodukt PM3.

Die Substanzproben aus Beispiel 1 und 2 (PM1 und PM2) werden i. Vgl. zu HYSAFE 549 (handelsüblicher Hydrotalzit der Fa. J.M. HUBER Corp.) - PM3 einem dynamischen Hitzetest (DWT) bei 195 °C unterworfen. Der Test wird an einem COLLIN-Walzwerk W110E durchgeführt (Walzendurchmesser: 110mm, 10 UpM, Friktion: -10%).

In 5 Min.-Intervallen werden aus dem Walzfell (d = 0,3mm) Prüfkörper (ca. 25x38mm) herausgeschnitten und deren Vergilbung (YI-Wert) mit einem Farbmessgerät der Fa. BYK GARDNER (Spectro Guide Sphere Gloss) nach ASTM D1925 bestimmt.

Die Prüfmuster waren wie folgt zusammengesetzt: (Tab. 1)

**Tab. 1: Zusammensetzung der Prüfmuster**

| Komponenten | PM 1 (Tle.) | PM 2 (Tle.) | PM 3 (Tle.) |
|---|---|---|---|
| PVC-1 (K-Wert: 68)¹⁾ | 94 | 94 | 94 |
| PVC-2²⁾ | 12 | 12 | 12 |
| Kreide (Omya 95T) | 6 | 6 | 6 |
| Titandioxid (Kronos 2220) | 4 | 4 | 4 |
| Gleitmittel - 1 (Loxiol G60)³⁾ | 0,5 | 0,5 | 0,5 |
| Gleitmittel - 2 (Loxiol G22)³⁾ | 0,1 | 0,1 | 0,1 |
| Ca/Zn-Stabilisator⁴⁾ | 2,2 | 2,2 | 2,2 |
| Produkt - Beispiel 1 | 0,8 | -- | -- |
| Produkt - Beispiel 2 | -- | 0,8 | -- |
| HYSAFE 549 | -- | -- | 0,8 |

| | | | |
|---|---|---|---|
| ¹⁾ = Vinnolit S 3268, Fa. Vinnolit; ²⁾ = Vinnolit K 707 E (Copolymer aus PVC und Polyacrylat) ; ³⁾ = Fa. COGNIS; ⁴⁾ = Ca/Zn-Stabilisatorzusammensetzung ohne Langzeitkomponente für Außenanwendungen | | | |

Die Proben werden homogenisiert und anschließend gewalzt. Die YI-Werte der einzelnen Prüfkörper sind nachfolgender Tab. 2 zu entnehmen.

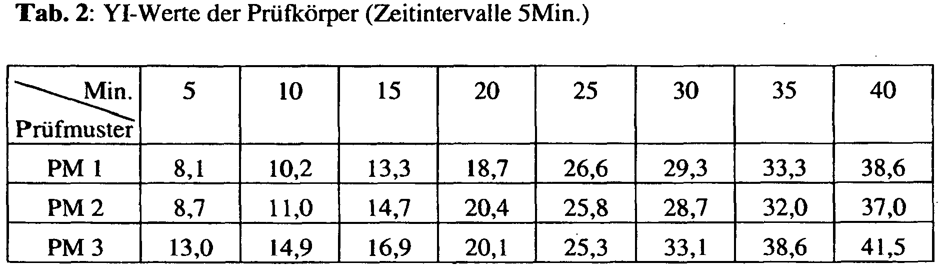

PM1 und PM2 sind erfindungsgemäß. PM3 entspricht dem nächstliegenden Stand der Technik (SdT). Wie ersichtlich, ist die Performance (bei gewichtsgleichem Einsatz) in der Farbhaltung(FH) dem SdT vergleichbar. Die Anfangsfarbe (AF) ist jedoch gegenüber dem SdT deutlich verbessert.

## Patentansprüche

1. Neutrales Kalzium-Aluminium-Doppelsalz der Formel **(A):**
Ca₂ₘ(Zn₂ₙ)Al₂(OH)₆₊₂₍₂ₘ₊₂ₙ₋₁₎An_{*}oH₂O **(A),**
wobei für **m** und **n** gilt: **m** = 0,5 bis 3 sowie 0,5**m** ≥ **n >** 0; **An** = CO₃ ist, wobei dieses ganz oder teilweise durch mindestens eine der folgenden Gruppen ausgewählt aus OH, ClO₄ and F₃CS(=O)₂O (Triflat) ausgetauscht sein kann und **o** = 0 bis 3 ist.

2. Doppelsalz nach Anspruch 1, **dadurch gekennzeichnet, dass An** = CO₃ ist.

3. Doppelsalz nach Anspruch 2, **dadurch gekennzeichnet, dass** für **m** und **n** gilt: **m** = 1,25 bis 3,0 und 0,25**m≥ n >** 0 und **o** = 0 bis 1,5 ist.

4. Doppelsalz nach Anspruch 1, **dadurch gekennzeichnet, dass An** = CO₃ ist, das teilweise durch ClO₄ oder OH ersetzt ist.

5. Doppelsalz nach Anspruch 1, **dadurch gekennzeichnet, dass An** = Karbonat ist, das ganz durch ClO₄ und OH ersetzt ist.

6. Verfahren zur Herstellung von Doppelsalzen nach einem der Ansprüche 1 bis 5, die Schritte enthaltend
(a) Umsetzung von CaO, oder Ca(OH)₂, ZnO oder Zn(OH)₂ und Al(OH)₃ in wässriger Suspension und Zugabe von CO₂ oder Alkali(bi)karbonat, wobei Umsetzung bei Temperaturen von 10 bis 100 °C erfolgt und
(b1) gegebenenfalls Umsetzung des in Schritt (a) erhaltenen Produktes mit Perchlorsäure oder Trifluormethansulfonsäure oder
(b2) gegebenenfalls Kalzinierung des in Schritt (a) erhaltenen Produktes bei Temperaturen von 200 bis 900 °C, Anionenaustausch mit Alkaliperchlorat oder -triflat gegebenenfalls in Anwesenheit von Alkali(bi)karbonat in Wasser.

7. Zusammensetzung enthaltend ein synthetisches Polymer und mindestens ein Doppelsalz nach einem der Ansprüche 1 bis 5.

8. Zusammensetzung nach Anspruch 7, **dadurch gekennzeichnet, dass** das synthetische Polymer Polyvinylchlorid (PVC) ist.

9. Stabilisatorsystem für synthetische Polymere, enthaltend mindestens ein Doppelsalz nach einem der Ansprüche 1 bis 5.

10. Stabilisatorsystem nach Anspruch 9, **dadurch gekennzeichnet, dass** die Einsatzmenge des Doppelsalzes von 0,1 bis 10,0, bevorzugt von 1,0 bis 5,0, besonders bevorzugt von 0,5 bis 2,0 phr. liegt.

11. Stabilisatorsystem nach Anspruch 9 oder 10, **dadurch gekennzeichnet, dass** zusätzlich mindestens eine der folgenden Substanzen vorhanden ist:
ein Mt^{II} (hydr)oxid (Mt = Mg, Ca, Zn) oder Aluminiumhydroxid, eine Mg-, Ca-, AI- oder Zn-Seife, ein Hydrotalzit, Dawsonit, Zeolith oder ein Ca-Al-hydroxo-Hydrogenphosphit, eine Glyzidylverbindung, ein epoxidierter Fettsäureester, ein Polyol (z.B. Maltit, Lactit, Palatinit, Pentaerythrit, Dipentaerythrit, TMP (Bis-TMP) oder THEIC), ein Phosphorigsäureester, 2-Naphthol, ein Alkali-, Erdalkali- oder Zinkperchlorat (beziehungsweise-triflat) - auch gelöst in Wasser oder einem organischen Solvens (z.B. BDG, PEG oder ein Polyol) -, ein Costabilisator aus der Gruppe der substituierten Zyanazetylharnstoffe, der substituierten Aminourazile, 3-Aininokrotonsäureester und/oder Dihydropyridindikarbonsäureester, Verarbeitungshilfen, Gleitmittel, Weichmacher, Pigmente, Füllstoffe, epoxidierte Fettsäureester, Antioxidantien, UV-Absorber, Lichtstabilisatoren, Schlagzähmodifikatoren, optische Aufheller, Antistatika, Biozide, Flammschutzmittel, Treibmittel oder Antifoggingagentien.

12. Verwendung von Stabilisatorsystemen nach einem der Ansprüche 9 bis 11 als Stabilisatoren für synthetische Polymere, insbesondere PVC-Stabilisatoren, insbesondere zur Stabilisierung von Hart-PVC und Weich-PVC.

13. Verwendung von Doppelsalzen nach einem der Ansprüche 1 bis 5 als Adsorbate, wobei die Doppelsalze als feste Träger dienen und Alkali- oder Erdalkaliperchlorate beziehungsweise -triflate in flüssiger (gelöster) Form auf diese aufgebracht oder auf diese aufgesprüht werden.

14. Verwendung von Doppelsalzen nach einem der Ansprüche 1 bis 5 als Additive für Polyolefine, z.B. für PE, PP, PB und PIB oder andere synthetische Polymere, insbesondere als Flammschutzmittel/Rauchverminderer oder Füllstoffe oder als Katalysator(vorstufen) und zur Enzymimmobilisierung.

## Claims

1. A neutral calcium-aluminum double salt of the formula **(A):**
Ca₂ₘ(Zn₂ₙ)Al₂(OH)₆₊₂₍₂ₘ₊₂ₙ₋₁₎An_{*}oH₂O **(A),**
where the following apply for **m** and **n: m** = 0.5 to 3 and 0.5**m ≥** n > 0; **An** = CO₃, where this can be replaced completely or partially by at least one of the following groups selected from OH, ClO₄ and F₃CS(=O)₂O (triflate) and **o =** 0 to 3.

2. The double salt as claimed in claim 1, **characterized in that An =** CO₃.

3. The double salt as claimed in claim 2, **characterized in that** the following apply for **m** and **n**: **m** = 1.25 to 3.0 and 0.25**m ≥ n** > 0 and **o** = 0 to 1.5.

4. The double salt as claimed in claim 1, **characterized in that An =** CO₃, which is partially replaced by ClO₄ or OH.

5. The double salt as claimed in claim 1, **characterized in that An** = carbonate which is completed replaced by ClO₄ and OH.

6. A method of preparing double salts as claimed in any one of claims 1 to 5, comprising the steps
(a) reaction of CaO, or Ca(OH)₂, ZnO or Zn(OH)₂ and Al(OH)₃ in aqueous suspension and addition of CO₂ or alkali metal (bi)carbonate, where reaction takes place at temperatures of from 10 to 100°C and
(b1) optionally reaction of the product obtained in step (a) with perchloric acid or trifluoromethanesulfonic acid or
(b2) optionally calcination of the product obtained in step (a) at temperatures of from 200 to 900°C, anion exchange with alkali metal perchlorate or triflate, if appropriate in the presence of alkali metal (bi)carbonate in water.

7. A composition comprising a synthetic polymer and at least one double salt as claimed in any one of claims 1 to 5.

8. The composition as claimed in claim 7, **characterized in that** the synthetic polymer is polyvinyl chloride (PVC).

9. A stabilizer system for synthetic polymers, comprising at least one double salt as claimed in any one of claims 1 to 5.

10. The stabilizer system as claimed in claim 9, **characterized in that** the use amount of the double salt is from 0.1 to 10.0, preferably from 1.0 to 5.0, particularly preferably from 0.5 to 2.0 phr.

11. The stabilizer system as claimed in claim 9 or 10, **characterized in that** additionally at least one of the following substances is present:
an Mt^{II} (hydr)oxide (Mt = Mg, Ca, Zn) or aluminum hydroxide, an Mg, Ca, Al or Zn soap, a hydrotalcite, Dawsonite, zeolite or Ca-Al hydroxohydrogenphosphite, a glycidyl compound, an epoxidized fatty acid ester, a polyol (e.g. maltitol, lactitol, palatinitol, pentaerythritol, dipentaerythritol, TMP (bis-TMP) or THEIC), a phosphoric acid ester, 2-naphthol, an alkali metal, alkaline earth metal or zinc perchlorate (or triflate) - also dissolved in water or an organic solvent (e.g. BDG, PEG or a polyol) -, a costabilizer from the group of substituted cyanacetylureas, the substituted aminouracils, 3-aminocrotonic acid esters and/or dihydropyridinedicarboxylic acid esters, processing aids, lubricants, plasticizers, pigments, fillers, epoxidized fatty acid esters, antioxidants, UV absorbers, photo stabilizers, impact modifiers, optical brighteners, antistats, biocides, flame retardants, propellants or antifogging agents.

12. The use of stabilizer systems as claimed in any one of claims 9 to 11 as stabilizers for synthetic polymers, in particular PVC stabilizers, in particular for the stabilization of rigid PVC and flexible PVC.

13. The use of double salts as claimed in any one of claims 1 to 5 as adsorbates, where the double salts serve as solid carriers and alkali metal or alkaline earth metal perchlorates and/or triflates in liquid (dissolved) form are applied to these or sprayed onto these.

14. The use of double salts as claimed in any one of claims 1 to 5 as additives for polyolefins, e.g. for PE, PP, PB and PIB or other synthetic polymers, in particular as flame retardants/smoke reducers or fillers or as catalyst (precursors) and for enzyme immobilization.

## Revendications

1. Sel double neutre de calcium et d'aluminium de formule (A) :
Ca₂ₘ(Zn₂ₙ)Al₂(OH)₆₊₂₍₂ₘ₊₂ₙ₋₁₎An_{*}oH₂O **(A),**
dans laquelle, pour m et n : m = 0,5 à 3, ainsi que 0,5 m ≥ n > 0 ; An = CO₃, ce dernier pouvant être remplacé en totalité ou en partie par au moins l'un des groupes suivants choisis parmi OH, ClO₄ et F₃CS(=O)₂O (triflate), et o = 0 à 3.

2. Sel double selon la revendication 1, **caractérisé en ce que** An = CO₃.

3. Sel double selon la revendication 2, **caractérisé en ce que**, pour m et n : m = 1,25 à 3,0,et 0,25 m ≥ n > 0,et o=0 à 1,5.

4. Sel double selon la revendication 1, **caractérisé en ce que** An = CO₃, qui est remplacé partiellement par ClO₄ ou OH.

5. Sel double selon la revendication 1, **caractérisé en ce que** An est un carbonate, qui est complètement remplacé par ClO₄ et OH.

6. Procédé de préparation de sels doubles selon l'une des revendications 1 à 5, qui comprend les étapes:
(a) réaction de CaO, ou de Ca(OH)₂, de ZnO ou de Zn(OH)₂ et d'Al(OH)₃ en suspension aqueuse et addition de CO₂ ou d'un (bi)carbonate d'un métal alcalin, la réaction ayant lieu à des températures de 10 à 100°C, et
(b1) éventuellement, réaction du produit obtenu dans l'étape (a) avec de l'acide perchlorique ou de l'acide trifluorométhanesulfonique, ou
(b2) éventuellement, calcination du produit obtenu dans l'étape (a) à des températures de 200 à 900°C, échange d'anions avec un triflate- ou perchlorate d'un métal alcalin, éventuellement en présence d'un (bi)carbonate d'un métal alcalin dans l'eau.

7. Composition contenant un polymère synthétique et au moins un sel double selon l'une des revendications 1 à 5.

8. Composition selon la revendication 7, **caractérisée en ce que** le polymère synthétique est le poly(chlorure de vinyle) (PVC).

9. Système stabilisant pour polymères synthétiques, contenant au moins un sel double selon l'une des revendications 1 à 5.

10. Système stabilisant selon la revendication 9, **caractérisé en ce que** la quantité utilisée du sel double est de 0,1 à 10,0, de préférence de 1,0 à 5,0, et encore plus préférentiellement de 0,5 à 2,0 phr.

11. Système stabilisant selon la revendication 9 ou 10, **caractérisé en ce que** en outre au moins l'une des substances suivantes est présente :
un (hydr)oxyde de Mt^{II} (Mt = Mg, Ca, Zn) ou un hydroxyde d'aluminium, un savon de Mg, de Ca, d'Al ou de Zn, une hydrotalcite, une dawsonite, une zéolithe ou un hydroxy-hydrogénophosphite de Ca-Al, un composé glycidyle, un ester d'acide gras époxydé, un polyol (par exemple maltitol, lactitol, palatinitol, pentaérythritol, dipentaérythritol, TMP (Bis-TMP) ou THEIC), un ester d'acide phosphoreux, le 2-naphtol, un perchlorate (respectivement triflate) de zinc, d'un métal alcalin, d'un métal alcalino-terreux - également dissous dans l'eau ou dans un solvant organique (par exemple BDG, PEG ou un polyol) -, un co-stabilisant du groupe des cyano-acétylurées substituées, des aminouraziles substitués, des esters de l'acide 3-aminocrotonique et/ou des esters de l'acide dihydropyridinedicarboxylique, les auxiliaires de mise en oeuvre, les lubrifiants, les plastifiants, les pigments, les matières de charge, les esters d'acides gras époxydés, les antioxydants, les absorbants UV, les photostabilisants, les agents qui modifient la capacité à absorber les chocs, les azurants optiques, les antistatiques, les biocides, les ignifugeants, les agents gonflants ou les agents anti-buée.

12. Utilisation de systèmes stabilisants selon l'une des revendications 9 à 11 en tant que stabilisants pour polymères synthétiques, en particulier en tant que stabilisants pour PVC, en particulier pour la stabilisation du PVC rigide et du PVC souple.

13. Utilisation de sels doubles selon l'une des revendications 1 à 5 en tant qu'adsorbats, les sels doubles servant de supports solides, et des perchlorates respectivement triflates de métaux alcalins ou alcalino-terreux étant, sous forme liquide (dissoute), appliqués ou pulvérisés sur eux.

14. Utilisation de sels doubles selon l'une des revendications 1 à 5 en tant qu'additifs pour polyoléfines, par exemple pour PE, PP, PB et PIB ou d'autres polymères synthétiques, en particulier en tant qu'agents ignifugeants/agents réducteurs de fumées, ou en tant que matières de charge ou en tant que (précurseurs de) catalyseurs, ou pour l'immobilisation d'enzymes.
